# EUROPÄISCHE PATENTSCHRIFT

(11) **EP 2 533 912 B1**
(45) Veröffentlichungstag und Bekanntmachung des Hinweises auf die Patenterteilung: **09.04.2014**
(21) Anmeldenummer: 11704024.6
(22) Anmeldetag: 09.02.2011
(51) Int. Cl.: B08B 17/04, B08B 17/06

(54) **ANTIFOULING FOLIE**
ANTIFOULING FILM
FILM ANTISALISSURE

(30) Priorität: 12.02.2010 DE 102010007793
(43) Veröffentlichungstag der Anmeldung: 19.12.2012
(73) Patentinhaber: Renolit SE, 67547 Worms (DE); Hochschule Bremen, 28201 Bremen (DE)
(72) Erfinder: EISER, Wolfgang, 64668 Rimbach (DE); MASANEK, Frank, 66879 Reichenbach (DE); BRÜGGEMANN, Jürgen, 67547 Worms (DE); KESEL, Antonia, 66119 Saarbrücken (DE)
(74) Vertreter: Wagner, Jutta
(86) Internationale Anmeldenummer: PCT/EP2011/000609
(87) Internationale Veröffentlichungsnummer: WO 2011/098266

(56) Entgegenhaltungen:
- EP-A1- 0 205 289
- WO-A1-02/32755
- WO-A1-03/087604
- DE-C1- 19 650 439

## Beschreibung

Die vorliegende Erfindung betrifft die Verwendung einer Folie zum Schutz von Oberflächen, die Meerwasserkontakt haben, vor Bewuchs.

Teile, welche über längere Zeit mit Meerwasser Kontakt haben, besonders die äußere Oberfläche von Schiffen aber auch Off-Shore Anlagen zur Öl- bzw. Gasförderung oder Windenergieerzeugung, werden von einer Vielzahl maritimer Lebewesen besiedelt. Vor allem Algen, Muscheln und Seepocken stellen ein großes Problem dar, der Bewuchs mit diesen Organismen ist nicht nur schwierig zu entfernen sondern bremst im Falle von sich bewegenden Objekten auch die Fortbewegung. Schiffe, deren äußere Oberfläche einen starken Bewuchs aufweist, werden merklich gebremst, was einen erhöhten Treibstoffverbrauch bedingt. Aus diesem Grund werden Schiffe derzeit spätestens etwa alle 2 Jahre im Trockendock gereinigt. Die Reinigung ist sehr aufwändig, da besonders Muscheln und Seepocken äußerst fest anhaften.

Die bisher am häufigsten bei Schiffen praktizierte Maßnahme gegen den Bewuchs besteht in einem Anstrich mit bioziden Beschichtungen. Diese Anstriche sind aber ökologisch bedenklich, da ein Herauslösen in das Meerwasser stattfindet und die toxischen Substanzen so in die Meere gelangen.

Als Alternative ist auch versucht worden, möglichst glatte Oberflächen zu schaffen, die eine Anhaftung erschweren sollen. Der Erfolg war aber unbefriedigend.

Aus WO 2008/025538 A1 ist eine Antifouling-Beschichtung bekannt geworden, bei der ein Siliconpolymer mit einer mikrostrukturierten Oberfläche auf die zu schützenden Teile aufgebracht wird. Entweder wird die Mikrostruktur durch Härten an einer körrespondierenden Oberfläche erzeugt, oder es werden Partikel geeigneter Größe in das Polymer eingebracht. Die Antifouling Wirkung soll auf der Kombination von Mikrostruktur, Oberflächenenergie des Siliconpolymers und der Elastizität des Materials beruhen. Siliconpolymere neigen dazu, verbliebene Monomere und Polymere mit zu geringer Molmasse abzugeben und sind daher nicht als optimal anzusehen.

Es besteht daher weiterhin Bedarf an einer ökonomisch und ökologisch befriedigenden Lösung des Problems.

Überraschend wurde nun gefunden, dass eine Beschichtung von mit Meerwasser berührten Teilen mit einer PVC-Folie, die eine Rillenstruktur aufweist und sowohl meerwasserbeständig als auch elastisch ist, die Probleme lösen kann.

Die Erfindung betrifft daher die Verwendung einer Folie aus thermoplastischem Kunststoff mit einer Bruchdehnung im Bereich von 100 bis 200 %, einem 2 % Modul im Bereich von 15 bis 25 N/15mm sowie einer Streckkraft im Bereich von 25 bis 40 N/15mm (alle gemessen nach DIN EN ISO 527-3/2/200) zur Beschichtung von Teilen, die mit Meerwasser in Kontakt stehen zum Schutz vor Bewuchs, wobei die Folie eine Rillenstruktur aufweist, die von Rippen gebildet wird und eine Rippe eine Breite von 1 bis 40 µm und eine Höhe von 10 bis 60 µm aufweist, der Abstand benachbarter Rippen von 40 bis 80 µm und der Öffnungswinkel der Rippenflanken von 30 bis 45 ° beträgt.

Die Rillenstruktur ist so dimensioniert, dass Organismen keine oder nur eine geringe Haftung entwickeln, so dass der Bewuchs vermindert wird und etwaiger Bewuchs leicht entfernt werden kann.

Die Rillenstruktur wird bei bewegten Objekten so orientiert, dass die Rippen zumindest im wesentlichen in Richtung des strömenden Wassers ausgerichtet sind. Bei Schiffen sollen sie so z.B. im wesentlichen waagerecht und parallel zur Länge des Schiffes verlaufen.

Vorzugsweise beträgt die Breite einer Rippe von 3 bis 8 µm, insbesondere etwa 5 µm. Die Höhe beträgt vorzugsweise von 20 bis 40 µm, insbesondere etwa 30 µm. Der Abstand benachbarter Rippen, gemessen von Mitte zu Mitte, beträgt vorzugsweise 50 bis 70 µm und insbesondere etwa 60 µm. Bevorzugte Öffnungswinkel der Rippenflanken sind 30 **°** und 45 °.

Als Material eignen sich alle ausreichend abriebbeständigen, salzwasserfesten und UV-stabilen Kunststoffe, besonders bevorzugt sind Polymere auf Basis von Vinylmonomeren, insbesondere Polyvinylchlorid (PVC). Es ist im Hinblick auf die Abrieb- und UV-beständigkeit vorteilhaft, an der Oberfläche fluorierte Polymere einzusetzen. Besonders bevorzugt wird daher eine mehrlagige Folie mit einer Trägerschicht auf Basis von PVC und einer Deckschicht aus einem Fluorpolymer, insbesondere aus Polyvinylidenfluorid (PVDF). Der PVC-Gehalt der mehrschichtigen Folie beträgt bevorzugt mindestens 65 Gew.-%. Ebenfalls gut geeignet sind Folien auf Basis von PVC und oder Ethylenvinylacetat (EVA), insbesondere mehrschichtige Folien mit einer Trägerschicht auf Basis von PVC oder PVC-EVA und einer Deckschicht in Form einer Verbundfolie aus Acrylat und PVDF. Die Verbundfolie der Deckschicht weist dabei vorzugsweise zwei Schichten, nämlich eine Acrylat- und eine PVDF-Schicht auf oder drei Schichten, nämlich eine Acrylat-, eine Acrylat-PVDF- und eine PVDF-Schicht. Als Acrylat eignet sich besonders Polymethylmethacrylat (PMMA). Die mehrlagigen Folien können in an sich bekannter Weise durch Coextrusion oder durch Laminierung von getrennt hergestellten Folien erzeugt werden.

Die Folie kann in an sich bekannter Weise Additive und Zusatzstoffe aufweisen, die in den üblichen Mengen verwendet werden. Bevorzugt sind im Falle von PVC-Folien beispielsweise Weichmacher, Stabilisatoren und gewünschtenfalls Pigmente und/oder Farbstoffe enthalten. Bei einem Suspensions-PVC (S-PVC) sind z.B. 60 - 70 Gew.-% PVC; 5 - 10 Gew.-% EVA; 15 - 25 Gew.-% Polymerweichmacher, 2,0 - 3,0 Gew.-% Barium/Zink Stabilisator; 5 - 10 Gew.-% Modifier und 0,5 - 1,0 Gew.-% Lichtschutzmittel typisch. Die Menge der Pigmente/Farbstoffe hängt von der gewünschten Farbe ab.

Foliendicken im Bereich von 100 µm bis 300 µm, insbesondere von 150 µm bis 200 µm haben sich bewährt.

Die Herstellung der erfindungsgemäßen Folien erfolgt in an sich bekannter Weise z.B. auf Kalandern. Mehrschichtige Folien, die zwei, drei oder noch mehr Schichten aufweisen können, werden durch Coextrusion, Direktextrusion oder Laminierung erhalten. Diese Verfahren sind dem Fachmann bekannt.

Typischerweise wird die Folie extrudiert und auf einem Prägekalander bei einer Geschwindigkeit von 6-12 m/min bei einer Zugkraft von 50 bis 150 N geprägt. Die Heizwalzen sollten vorzugsweise eine Temperatur von 50 bis 160 °C, die Prägewalze eine Temperatur von 20 bis 150°C haben. Der Prägedruck beträgt üblicherweise von 40 bis 80 bar. Die Kühlung erfolgt in der Regel bei 20 bis 70 °C.

Die erfindungsgemäße Rillenstruktur wird vorzugsweise durch eine Prägung erzeugt. Dazu wird die noch warme bzw. wieder erwärmte Folie durch ein Prägewerk geführt, wobei die Prägewalze ein Negativ der gewünschten Rillenstruktur aufweist.

Die erfindungsgemäße Folie eignet sich in besonderer Weise zum Schutz von Meerwasser kontaktierenden Teilen wie Schiffen, Off-Shore Anlagen etc. Sie kann besonders günstig mittels Klebstoff aufgebracht werden. Geeignet sind im Prinzip alle Klebstoffe, die eine ausreichende Beständigkeit gegen Meerwasser zeigen. Besonders geeignet kann ein Klebstoff auf die Folie aufgebracht werden. Ein Auftrag auf die zu beschichtenden Teile ist auch möglich.

Die Erfindung soll anhand der Figuren und der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Es zeigt
Figur 1a eine erste bevorzugte Rillenstruktur im Querschnitt
Figur 1b eine Walzenoberfläche zur Prägung der Struktur von Figur 1 a
Figur 2a eine zweite bevorzugte Rillenstruktur im Querschnitt
Figur 2b eine Walzenoberfläche zur Prägung der Struktur von Figur 2a

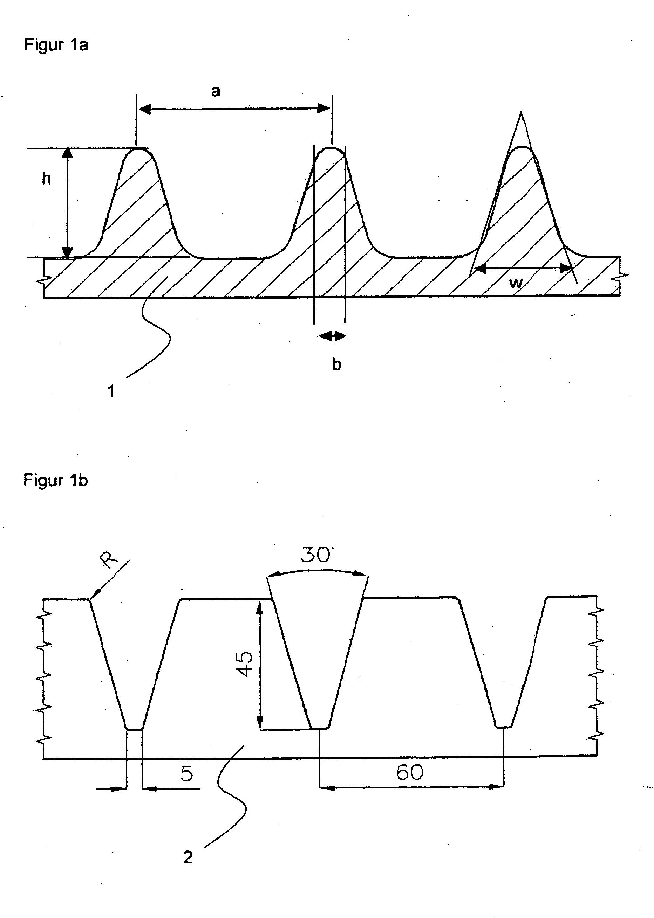

Die Struktur in Figur 1a wird durch Prägen einer Folie 1 mit einer Walze 2 erzeugt, welche eine Oberfläche wie in Figur 1b gezeigt aufweist. Beide Figuren stellen einen schematischen Querschnitt dar. In Figur 1a beträgt die Breite b einer Rippe 5 µm, der Abstand a zweier Rippen 60 µm, die Höhe h beträgt 35 µm und der Öffnungswinkel w der Rippenflanken beträgt 30 °. Um diese Abmessungen zu erreichen wird mit einer Walze wie in Figur 1b gezeigt geprägt. Die Tiefe der Walze ist etwas größer als die gewünschte Höhe der Rippe. Die Radien R betragen etwa 1 µm, eingezeichnet ist nur einer. Die Prägung erfolgt in Maschinenrichtung, d.h. parallel zur Länge, der längsten Ausdehnung, der Folie.

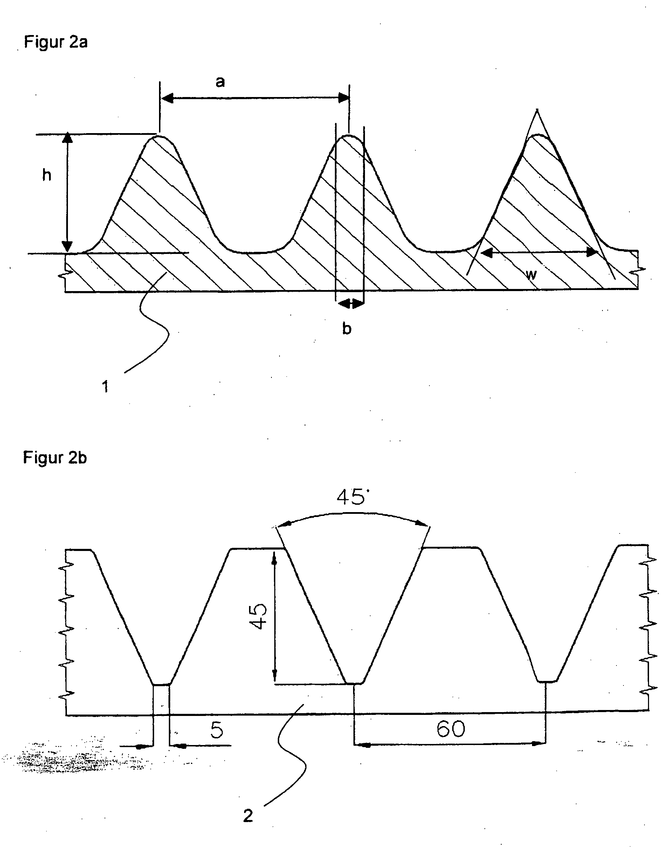

Die Struktur in Figur 2a wird durch Prägen einer Folie mit einer Walze erzeugt, welche eine Oberfläche wie in Figur 2b gezeigt aufweist. Die Breite b einer Rippe beträgt 5 µm, der Abstand a zweier Rippen 60 µm, die Höhe h beträgt 35 µm und der Öffnungswinkel w der Rippenflanken beträgt 45 °.

### Beispiel 1

Es wurde eine Folie aus PVC mit einer erfindungsgemäßen Rillenstruktur wie in Figur 1 a hergestellt. Die Folienrezeptur umfasste: 54,7 Gew.-% PVC mit einem K-Wert von 80; 8,5 Gew.-% Ethylen-Vinylacetat Copolymer; 1,8 Gew.-% Acrylat-Modifier; 21,5 Gew.-% Polymerweichmacher; 2,5 Gew.-% Stabilisator; 1,7 Gew.-% Costabilisator; 8,5 Gew.-% Titandioxid; 0,7 Gew.-% Lichtschutzmittel und 0,1 Gew.-% Gleitmittel.

Die Folie wurde extrudiert und auf einem Prägekalander bei einer Geschwindigkeit von 6 m/min bei einer Zugkraft von 80 N mit der Rillenstruktur geprägt. Die Heizwalzen hatten eine Temperatur von 160 °C, die Prägewalze hatte eine Temperatur von 135 °C. Der Prägedruck wurde auf 60 bar eingestellt. Die Kühlung erfolgte bei 25 °C.

### Vergleichsbeispiel 1

Eine Folie wurde analog zu Beispiel 1 hergestellt, jedoch ohne Prägung.

### Beispiel 2

Eine Folie wurde analog zu Beispiel 1 hergestellt, jedoch mit einer coextrudierten Deckschicht aus PVDF und einer Struktur wie in Figur 2a.

### Beispiel 3

Die Folien von Beispiel 1, 2 und Vergleichsbeispiel 1 wurden mittels Transferkleber und einer Gummiwalze auf Aluminiumplatten geklebt. Die Platten wurden 3 Monate in der Nordsee versenkt. Nach der Herausnahme aus dem Meerwasser wurden die Platten mit einem Neigungswinkel von 45° aufgestellt und ca. 3 min mit einem Wasserstrahl, Druck ca. 3 bar, abgespült. Die visuelle Begutachtung ergab, dass bei Beispiel 1 30 % der Oberfläche gesäubert werden konnten und bei Beispiel 2 90 %. Bei der Vergleichsfolie wurde jedoch nur eine Säuberung von 5 % der Oberfläche erreicht.

### Beispiel 4

Der Einfluss der erfindungsgemäßen Folie auf den Strömungswiderstand wurde bestimmt. Dazu wurden wie in Beispiel 1 und Vergleichsbeispiel 1 Folien hergestellt und jeweils auf den Probekörper eines Rotationsviskosimeters geklebt. Der Probekörper wurde dann in Thermoöl getaucht und der Reibungswiderstand bei einer Rotation mit Drehzahlen von 20, 50, 60 und 100 Umdrehungen/Minute bestimmt. Wie sich aus den Ergebnissen in Tabelle 1 ersehen lässt, ergibt sich für die erfindungsgemäße Struktur ein Vorteil hinsichtlich des Strömungswiderstandes. Der geringere Reibungswiderstand zeigt einen geringeren Strömungswiderstand bei der erfindungsgemäßen Folie als bei einer glatten Folie an. [00030]

**Tabelle 1**

| | Reibungswiderstand in mPas bei | | | |
|---|---|---|---|---|
| | 20 U/min | 50 U/min | 60 U/min | 100 U/min |
| Vergleichsfolie | 49 | 64 | 70 | 92 |
| erfindungsgemäß | 47 | 57 | 64 | 86 |

### Bezugszeichenliste

- 1: Folie
- 2: Prägewalze
- a: Abstand der Rippen
- b: Breite der Rippen
- h: Höhe der Rippen
- w: Öffnungswinkel der Rippen
- R: Radius

## Patentansprüche

1. Verwendung einer Folie aus thermoplastischem Kunststoff mit einer Bruchdehnung im Bereich von 100 bis 200 %, einem 2 % Modul im Bereich von 15 bis 25 N/15mm sowie einer Streckkraft im Bereich von 25 bis 40 N/15mm, (alle gemessen nach DIN EN ISO_527-3/2/200) zur Beschichtung von Teilen, die mit Meerwasser in Kontakt stehen zum Schutz vor Bewuchs, **dadurch gekennzeichnet, dass** die Folie eine Rillenstruktur aufweist, die von Rippen gebildet wird, wobei eine Rippe eine Breite (b) von 1 bis 15 µm und eine Höhe (h) von 20 bis 40 µm aufweist, der Abstand (a) benachbarter Rippen von 40 bis 80 µm und der Öffnungswinkel (w) der Rippenflanken von 30 bis 45 ° beträgt.

2. Verwendung gemäß Anspruch 1, **dadurch gekennzeichnet, dass** der thermoplastische Kunststoff Polyvinylchlorid, gegebenenfalls unter Zusatz üblicher Additive, ist.

3. Verwendung gemäß Anspruch 1, **dadurch gekennzeichnet, dass** der thermoplastische Kunststoff Polyvinylchlorid oder ein Gemisch von Polyvinylchlorid und Ethylenvinylacetat, gegebenenfalls unter Zusatz üblicher Additive, ist.

4. Verwendung gemäß Anspruch 1, **dadurch gekennzeichnet, dass** die Folie eine Mehrschichtfolie ist, vorzugsweise auf Basis von Polyvinylchlorid oder einem Gemisch von Polyvinylchlorid und Ethylenvinylacetat mit einer oberen Schicht aus Polyvinylidenfluorid oder Acrylat/Polyvinylidenfluorid.

5. Verwendung gemäß mindestens einem der Ansprüche 1 bis 4, **dadurch gekennzeichnet, dass** die Breite (b) einer Rippe von 3 bis 8 µm, insbesondere etwa 5 µm beträgt.

6. Verwendung gemäß mindestens einem der Ansprüche 1 bis 5, **dadurch gekennzeichnet, dass** die Höhe (h) etwa 30 µm beträgt.

7. Verwendung gemäß mindestens einem der Ansprüche 1 bis 6, **dadurch gekennzeichnet, dass** der Abstand (a) benachbarter Rippen, gemessen von Mitte zu Mitte, von 50 bis 70 µm und insbesondere etwa 60 µm beträgt.

8. Verwendung gemäß mindestens einem der Ansprüche 1 bis 7, **dadurch gekennzeichnet, dass** der Öffnungswinkel (w) der Rippenflanken 30 ° oder 45 ° beträgt.

9. Verwendung gemäß mindestens einem der Ansprüche 1 bis 8, **dadurch gekennzeichnet, dass** die Dicke im Bereich von 100 µm bis 300 µm, insbesondere von 150 µm bis 200 µm liegt.

10. Verwendung gemäß mindestens einem der Ansprüche 1 bis 9, zur Beschichtung von Schiffen oder Off-Shore Anlagen zur Öl- oder Gasförderung oder Windenergieerzeugung.

11. Verfahren zum Schutz von Teilen, die mit Meerwasser in Kontakt stehen, **dadurch gekennzeichnet, dass** gemäß mindestens einem der Ansprüche 1 bis 9 eine Folie verwendet wird, die auf das Teil aufgebracht, vorzugsweise aufgeklebt, wird.

## Claims

1. Use of a film from thermoplastic plastic having an elongation at break in the range from 100 to 200 %, a 2% modulus in the range from 15 to 25 N/15 mm as well as a stretching force in the range from 25 to 40 N/15 mm (all measured according to DIN EN ISO 527-3/2/200), for coating parts that are in contact with sea water to provide protection from fouling **characterized in that** the film has a groove structure formed by ribs, wherein a rib has a width (b) from 1 to 15 µm and a height (h) from 20 to 40 µm, the distance (a) of adjacent ribs is from 40 to 80 µm, and the opening angle (w) of the rib flanks is from 30 to 45°.

2. The use according to claim 1, **characterized in that** the thermoplastic plastic is polyvinyl chloride, optionally with the addition of common additives.

3. The use according to claim 1, **characterized in that** the thermoplastic plastic is polyvinyl chloride or a mixture of polyvinyl chloride and ethylene vinyl acetate, optionally with the addition of common additives.

4. The use according to claim 1, **characterized in that** the film is a multilayer film, preferably based on polyvinyl chloride or a mixture of polyvinyl chloride and ethylene vinyl acetate having a top layer of polyvinylidene fluoride or acrylate / polyvinylidene fluoride.

5. The use according to any one of claims 1 to 4, **characterized in that** the width (b) of a rib is from 3 to 8 µm, in particular about 5 µm.

6. The use according to any one of claims 1 to 5, **characterized in that** the height (h) is about 30 µm.

7. The use according to any one of claims 1 to 6, **characterized in that** the distance (a) of adjacent ribs, measured from center to center, is from 50 to 70 µm, and more preferably about 60 µm.

8. The use according to any one of claims 1 to 7, **characterized in that** the opening angle (w) of the rib flanks is 30° or 45°.

9. The use according to any one of claims 1 to 8, **characterized in that** the thickness is in the range from 100 µm to 300 µm, in particular from 150 µm to 200 µm.

10. The use according to any of claims 1 to 9, for the coating of ships or offshore facilities for oil or gas production or wind energy generation.

11. A method for the protection of parts that are in contact with sea water, **characterized in that** a film is used according to at least one of claims 1 to 9, which is applied to the part, preferably glued onto it.

## Revendications

1. Utilisation d'une feuille en matériau synthétique thermoplastique présentant un allongement à la rupture dans la plage de 100 à 200%, un module à 2% dans la plage de 15 à 25 N/15 mm ainsi qu'une force d'étirement dans la plage de 25 à 40 N/15 mm, (tous mesurés selon la norme DIN EN ISO 527-3/2/200) pour le revêtement de pièces en contact avec l'eau de mer pour la protection contre une couverture végétale, **caractérisée en ce que** la feuille présente une structure à rainures, formée par des nervures, une nervure présentant une largeur (b) de 1 à 15 µm et une hauteur (h) de 20 à 40 µm, la distance (a) entre des nervures adjacentes valant 40 à 80 µm et l'angle d'ouverture (w) des flancs des nervures valant 30 à 45°.

2. Utilisation selon la revendication 1, **caractérisée en ce que** le matériau synthétique thermoplastique est le poly(chlorure de vinyle), le cas échéant avec addition d'additifs usuels.

3. Utilisation selon la revendication 1, **caractérisée en ce que** le matériau synthétique thermoplastique est le poly(chlorure de vinyle) ou un mélange de poly(chlorure de vinyle) et d'éthylène-acétate de vinyle, le cas échéant avec addition d'additifs usuels.

4. Utilisation selon la revendication 1, **caractérisée en ce que** la feuille est une feuille multicouche, de préférence à base de poly(chlorure de vinyle) ou d'un mélange de poly(chlorure de vinyle) et d'éthylène-acétate de vinyle, présentant une couche supérieure en poly(fluorure de vinylidène) ou en acrylate/poly(fluorure de vinylidène).

5. Utilisation selon au moins l'une quelconque des revendications 1 à 4, **caractérisée en ce que** la largeur (b) d'une nervure vaut 3 à 8 µm, en particulier environ 5 µm.

6. Utilisation selon au moins l'une quelconque des revendications 1 à 5, **caractérisée en ce que** la hauteur (h) vaut environ 30 µm.

7. Utilisation selon au moins l'une quelconque des revendications 1 à 6, **caractérisée en ce que** la distance (a) entre des nervures adjacentes, mesurée de centre à centre, vaut 50 à 70 µm et en particulier environ 60 µm.

8. Utilisation selon au moins l'une quelconque des revendications 1 à 7, **caractérisée en ce que** l'angle d'ouverture (w) des flancs des nervures vaut 30° ou 45°.

9. Utilisation selon au moins l'une quelconque des revendications 1 à 8, **caractérisée en ce que** l'épaisseur se situe dans la plage de 100 µm à 300 µm, en particulier de 150 µm à 200 µm.

10. Utilisation selon au moins l'une quelconque des revendications 1 à 9, pour le revêtement de bateaux ou d'installations off-shore destinées à l'extraction de pétrole ou de gaz ou à la production d'énergie éolienne.

11. Procédé pour la protection de pièces qui sont en contact avec l'eau de mer, **caractérisé en ce qu'**on utilise selon au moins l'une quelconque des revendications 1 à 9 une feuille qui est appliquée, de préférence collée, sur la pièce.
